(19) Europäisches Patentamt
European Patent Office
Office européen des brevets

(11) **EP 4 506 310 A1**

(12) **EUROPEAN PATENT APPLICATION**

(43) Date of publication:
**12.02.2025 Bulletin 2025/07**

(21) Application number: **24193454.6**

(22) Date of filing: **07.08.2024**

(51) International Patent Classification (IPC):
***C01G 53/00*** *(2025.01)* ***H01M 4/36*** *(2006.01)*
***H01M 4/525*** *(2010.01)* ***H01M 4/02*** *(2006.01)*
***H01M 10/052*** *(2010.01)* ***H01M 4/62*** *(2006.01)*

(52) Cooperative Patent Classification (CPC):
**C01G 53/50; H01M 4/0471; H01M 4/366; H01M 4/525; H01M 4/62; H01M 10/052;**
C01P 2004/84; H01M 2004/028; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.08.2023 KR 20230102761**

(71) Applicant: **SK On Co., Ltd.**
**Seoul 03161 (KR)**

(72) Inventors:
- **PARK, Sung Soon**
  **34124 Daejeon (KR)**
- **KIM, Jong Hwa**
  **34124 Daejeon (KR)**
- **YOO, Yeong Bin**
  **34124 Daejeon (KR)**
- **KIM, Sang Bok**
  **34124 Daejeon (KR)**

(74) Representative: **Stolmár & Partner Patentanwälte PartG mbB**
**Blumenstraße 17**
**80331 München (DE)**

(54) **CATHODE ACTIVE MATERIAL FOR LITHIUM SECONDARY BATTERY, METHOD OF PREPARING THE SAME AND LITHIUM SECONDARY BATTERY INCLUDING THE SAME**

(57) A cathode active material for a lithium secondary battery includes a coating element and lithium-nickel metal oxide particles. A coating area defined as $(A_C/A_{Ni})*100$ 1 is 25% or more. $A_C$ is an area of a region where a content of the coating element is 1.6 wt% or more based on a total weight of the lithium-nickel metal oxide particles in a quantitative map (Q-map) image obtained through a scanning electron microscope-energy dispersive X-ray spectroscopy (SEM-EDS), and $A_{Ni}$ is an area of a region where nickel is present in the Q-map image obtained through the SEM-EDS.

FIG. 1

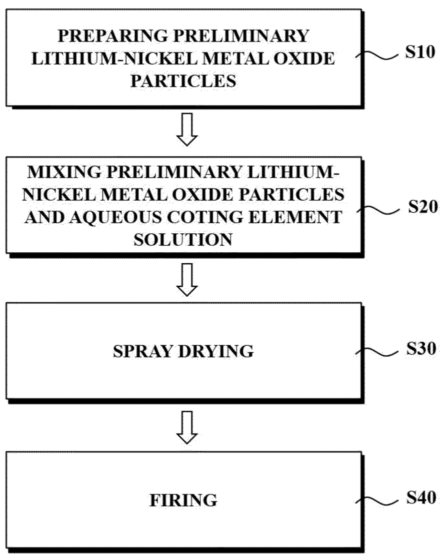


EP 4 506 310 A1

## Description

BACKGROUND

1. Field

The disclosure of this patent application relates to a cathode active material for a lithium secondary battery, a method of preparing the same and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

As an application range of the lithium secondary batteries is being expanded, developments of the lithium secondary battery having higher capacity, longer life-span and higher operational stability are required. For example, power and life-span properties of the lithium secondary battery may be degraded due to side reactions of a cathode active material and an electrolyte solution of the lithium secondary battery.

SUMMARY

According to an aspect of the present disclosure, there is provided a cathode active material for a lithium secondary battery having improved power and life-span properties.

According to an aspect of the present disclosure, there is provided a method of preparing a cathode active material for a lithium secondary battery having improved power and life-span properties.

According to an aspect of the present disclosure, there is provided a lithium secondary battery having improved power and life-span properties.

A cathode active material for a lithium secondary battery includes lithium-nickel metal oxide particles that include a coating element. A coating area defined by Equation 1 is 25% or more.

[Equation 1]

$$\text{coating area (\%)} = (A_C/A_{Ni})*100$$

In Equation 1, $A_C$ is an area of a region where a content of the coating element is 1.6 wt% or more based on a total weight of the lithium-nickel metal oxide particles in a quantitative map (Q-map) image obtained through a scanning electron microscope-energy dispersive X-ray spectroscopy (SEM-EDS), and $A_{Ni}$ is an area of a region where nickel is present in the Q-map image obtained through the SEM-EDS.

In some embodiments, the coating element may include S, W, Al, Zr, Ti, Ta, Mo, Nb, P and/or B.

In some embodiments, $A_C$ in Equation 1 may be an average of values obtained by measuring the area of the region where the content of the coating element is 1.6 wt% or more based on the total weight of the lithium-nickel metal oxide particles in the Q-map image obtained through SEM-EDS three times. and $A_{Ni}$ in Equation 1 may be an average of values obtained by measuring the area of the region where nickel is present in the Q-map image obtained through SEM-EDS three times.

In some embodiments, the lithium-nickel metal oxide particles may include a secondary particle formed by agglomeration of a plurality of primary particles, and the coating element may be located between the primary particles or on a surface of the secondary particle.

In some embodiments, the lithium-nickel metal oxide particles may further include a lithium-coating element compound containing the coating element and lithium.

In some embodiments, the coating area may be 35% or more.

In some embodiments, the lithium-nickel metal oxide particles may further include at least one of manganese and cobalt.

In some embodiments, a content of the coating element may be in a range from 2000 ppm to 7000 ppm based on the total weight of the lithium-nickel metal oxide particles.

In some embodiments, a content of the coating element may be in a range from 2500 ppm to 4000 ppm based on the total weight of the lithium-nickel metal oxide particles.

A lithium secondary battery includes a cathode including the cathode active material for a lithium secondary battery according to the above-described embodiments, and an anode facing the cathode.

In a method of preparing a cathode active material for a lithium secondary battery, preliminary lithium-nickel metal oxide particles are prepared. The preliminary lithium-nickel metal oxide particles and an aqueous coating element solution are mixed. The preliminary lithium-nickel metal oxide particles may be coated by a spray drying a mixture of the preliminary lithium-nickel metal oxide particles and the aqueous coating element solution. The coated preliminary lithium-nickel metal oxide particles may be fired to form lithium-nickel metal oxide particles having a coating area defined by Equation 1 of 25% or more.

[Equation 1]

$$\text{coating area (\%)} = (A_C/A_{Ni})*100$$

In Equation 1, $A_C$ is an area of a region where a content of the coating element is 1.6 wt% or more based on a total weight of the lithium-nickel metal oxide particles in a quantitative map (Q-map) image obtained through a scanning electron microscope-energy dispersive X-ray spectroscopy (SEM-EDS), and $A_{Ni}$ is an area of a region where nickel is present in the Q-map image obtained through the SEM-EDS.

In some embodiments, a content of the aqueous coating element solution may be in a range from 20 wt% to 100 wt% based on a weight of the preliminary lithium-nickel metal oxide particles.

In some embodiments, a content of the aqueous coating element solution is in a range from 40 wt% to 60 wt% based on a weight of the preliminary lithium-nickel metal oxide particles.

In some embodiments, the spray drying may include introducing the mixture of the preliminary lithium-nickel metal oxide particles and the aqueous coating element solution into a spray dryer, and spraying and drying the mixture.

In some embodiments, a rate of the spraying may be in a range from 400 mL/h to 800 mL/h, and the drying may be performed at a temperature in a range from 100 °C to 200 °C.

In some embodiments, the firing may be performed at a temperature in a range from 250°C to 450°C.

According to embodiments of the present disclosure, a cathode active material prepared by a method that includes preparing preliminary lithium-nickel metal oxide particles, mixing the preliminary lithium-nickel metal oxide particles and an aqueous coating element solution, coating the preliminary lithium-nickel metal oxide particles by a spray drying a mixture of the preliminary lithium-nickel metal oxide particles and the aqueous coating element solution, and firing the coated preliminary lithium-nickel metal oxide particles to form lithium-nickel metal oxide particles having the coating area defined by Equation 1 of 25% or more, is provided.

According to embodiments of the present disclosure, an ion conductivity of the cathode active material may be enhanced while suppressing a side reaction between the cathode active material and the electrolyte solution.

According to embodiments of the present disclosure, power and life-span properties of the lithium secondary battery may be improved.

The cathode active material and the lithium secondary battery of the present disclosure may be widely applied in an electric vehicle, a battery charging station, etc., and may also be applied to green technology fields such as solar power generation, wind power generation using batteries, etc. The cathode active material and the lithium secondary battery according to the present disclosure may be used for eco-friendly electric vehicles and hybrid vehicles to prevent a climate change by suppressing air pollution and greenhouse gas emissions, etc.

BRIEF DESCRIPTION OF THE DRAWINGS

FIG. 1 is a process flow-diagram describing a method of preparing a cathode active material in accordance with example embodiments.

FIG. 2 and FIG. 3 are a schematic plan view and a cross-sectional view, respectively, illustrating a lithium secondary battery in accordance with example embodiments.

FIG. 4 is an image of B-290 spray dryer manufacture by Buchi.

FIG. 5 is an image showing regions where a content of coating elements is 1.6 wt% or more based on a total weight of lithium-nickel metal oxide particles in a quantitative map (Q-map) image obtained through a scanning electron microscope-energy dispersive X-ray spectroscopy (SEM-EDS) of the lithium-nickel metal oxide particles of Example 1.

FIG. 6 is an image showing regions where nickel is present in the Q-map image obtained through SEM-EDS of the

lithium-nickel metal oxide particles of Example 1.

DETAILED DESCRIPTION OF THE EMBODIMENTS

Embodiments according to the present disclosure provide a cathode active material for a lithium secondary battery (hereinafter, abbreviated as "a cathode active material") including a coating element. A method of manufacturing the cathode active material and a lithium secondary battery (hereinafter, abbreviated as "secondary battery") including the cathode active material are also provided.

Hereinafter, embodiments of the present disclosure will be described in detail. However, these embodiments are merely illustrative and the present inventive concepts are not limited to a specific exemplary embodiment.

In example embodiments, the cathode active material includes a lithium (Li)-transition metal oxide particle.

In example embodiments, the lithium-transition metal oxide particle may include a lithium-nickel (Ni) metal oxide. The lithium-nickel metal oxide may further include at least one of cobalt (Co), manganese (Mn) and aluminum (Al).

In some embodiments, the cathode active material or the lithium-nickel metal oxide particle may include a layered structure or a crystal structure represented by Chemical Formula 1.

[Chemical Formula 1] $Li_xNi_aM_bO_{2+z}$

In Chemical Formula 1, $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Chemical Formula 1 represents a bonding relationship included in the layered structure or the crystal structure of the cathode active material or the lithium-nickel metal oxide particle, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-nickel metal oxide particle may include a layered structure or a crystal structure represented by Chemical Formula 1-1.

[Chemical formula 1-1] $Li_xNi_aM1_{b1}M2_{b2}O_{2+z}$

In Chemical Formula 1-1, M1 may include Co, Mn and/or Al. M2 may include the above-described auxiliary element. In Chemical Formula 1-1, $0.9 \leq x \leq 1.2$, $0.6 \leq a \leq 0.99$, $0.01 \leq b1+b2 \leq 0.4$, and $-0.5 \leq z \leq 0.1$.

The cathode active material above may further include a doping element. For example, elements substantially the same as or similar to the above-described auxiliary elements may be used as the doping element. For example, the above-described elements may be used alone or in a combination of two or more therefrom as the doping element.

The doping element may be present on a surface of the lithium-nickel metal oxide particle, or may penetrate through the surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., a mole fraction of nickel based on the total number of moles of nickel, cobalt and manganese) may be 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from

0.88 to 0.95.

For example, when the high nickel content (High-Ni) composition having the Ni content (e.g., the mole fraction of nickel based on the total number of moles of nickel, cobalt and manganese) in the NCM-based lithium oxide is adopted, calcination or firing of the lithium-nickel metal oxide particles may be performed at a relatively low temperature. In this case, generation of a residual lithium on the surface of the lithium-nickel metal oxide particles may be increased. Accordingly, the washing process or the non-aqueous washing process (e.g., a spray drying) may be performed to remove the residual lithium.

Thus, when the content of Ni in the NCM-based lithium oxide (e.g., the mole fraction of nickel based on the total number of moles of nickel, cobalt and manganese) is, e.g., 0.8 or more, the process for removing the residual lithium may be substantially significant or efficient.

The cathode active material includes a plurality of the above-described lithium-nickel metal oxide particles. For example, a content of the lithium-nickel metal oxide particles may be 50 weight percent (wt%) or more, 60 wt% or more, 70 wt% or more, 80 wt% or more, 90 wt% or more, or 95 wt% or more based on a total weight of the cathode active material. In an embodiment, the cathode active material may substantially consist of the lithium-nickel metal oxide particles.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, e.g., a LLO (Li-rich layered oxide)/OLO (over-lithiated oxide)-based active material, a Mn-rich-based active material, a Co-less active material, etc., having a chemical structure or a crystal structure represented by Chemical Formula 2. These may be used alone or in a combination of two or more therefrom.

[Chemical Formula 2] $p[Li_2MnO_3]\cdot(1-p)[Li_qJO_2]$

In Chemical Formula 2, $0<p<1$, $0.9\leq q\leq 1.2$, and J may include at least one element of Mn, Ni, Co, Fe, Cr, V, Cu, Zn, Ti, Al, Mg and B.

In example embodiments, the lithium-nickel metal oxide particle may include a coating element. Accordingly, an ionic conductivity of the cathode active material may be improved and the side reactions of the cathode active material and the electrolyte may be suppressed.

In some embodiments, the coating element may include at least one selected from the group consisting of sulfur (S), tungsten (W), aluminum (Al), zirconium (Zr), titanium (Ti), tantalum (Ta), molybdenum (Mo), niobium (Nb), phosphorus (P) and boron (B).

For example, the lithium-nickel metal oxide particles may include secondary particles formed by agglomeration of a plurality of primary particles. The coating element may be formed between the primary particles and/or on a surface of the secondary particle.

In some embodiments, the primary particles present on a surface portion of the lithium-nickel metal oxide particle may have a hexagonal close-packed structure. Accordingly, a large amount of lithium and transition metal elements may have a stable structure in a layered form even in a small space, thereby improving the capacity and life-span properties of the secondary battery.

According to embodiments of the present disclosure, the lithium-nickel metal oxide article has a coating area of 25% or more defined by Equation 1 below.

[Equation 1]

$$\text{Coating Area (\%)} = (A_C/A_{Ni})*100$$

In Equation 1, $A_C$ is an area of a region where a content of the coating element is 1.6 wt% or more based on a total weight of the lithium-nickel metal oxide particles in a quantitative map (Q-map) image obtained through a scanning electron microscope-energy dispersive X-ray spectroscopy (SEM-EDS), and $A_{Ni}$ is an area of a region where nickel is present in the Q-map image obtained through the SEM-EDS.

In some embodiments, the coating area may be 35% or more, 50% or more, or 65% or more, and may be 100% or less, 80% or less, 70% or less, or 55% or less.

For example, a unit (%) of the coating area may represent an area%.

For example, the coating area may represent a region where the coating element is sufficiently formed on the surface portion of the lithium-nickel metal oxide particle (e.g., a region where the content of the coating element is 1.6 wt% or more based on the total weight of the lithium-nickel metal oxide particle).

Within the coating area range, the coating element may be uniformly formed on the surface portion of the lithium-nickel metal oxide particle. Accordingly, the ionic conductivity of the cathode active material may be improved and the side

reactions of the cathode active material and the electrolyte may be prevented. Thus, power and life-span properties of the secondary battery may be improved.

In some embodiments, $A_C$ may be an average value after measuring an area of a region where the content of the coating element is 1.6 wt% or more based on the total weight of the lithium-nickel metal oxide particles in the Q-map image obtained through the SEM-EDS three times. $A_{Ni}$ may be an average value after measuring an area of a region where nickel is present in the Q-map image obtained through the SEM-EDS three times. Accordingly, measurement precision and reliability of the coating area may be enhanced.

In some embodiments, the lithium-nickel metal oxide particle may further include a lithium-coating element compound including the coating element and lithium. In an embodiment, at least some of the coating elements may exist in the form of a lithium-coating element compound.

For example, the lithium-coating element compound may be formed by combining the residual lithium and the coating element present between the primary particles of the lithium-nickel metal oxide particle or on the surface of the secondary particle. The lithium-coating element compound may have relatively higher structural stability than that of the residual lithium. Accordingly, the residual lithium on the surface of the lithium-nickel metal oxide particle may be reduced, thereby improving an initial capacity and an initial efficiency of the secondary battery.

For example, the residual lithium may include lithium hydroxide (LiOH), lithium carbonate ($Li_2CO_3$), etc.

For example, the lithium-coating element compound may include $Li_2SO_4$, $Li_2WO_4$, $Li_2W_2O_7$, $LiAlO_2$, $Li_2ZrO_3$, $LiTaO_3$, $Li_2TiO_3$, $Li_4Ti_5O_{12}$, $Li_{0.9}Mo_6O_7$, $Li_2MoO_4$, $LiNbO_3$, $Li_2NbO_3$, $Li_3PO_4$, $LiBO_2$, $LIB_3O_5$, $Li_2B_4O_7$, etc. These may be included in the lithium-coated element compound alone or in combination of two or more therefrom depending on a type of the coating element.

In some embodiments, the lithium-coating element compound may have a monoclinic crystal structure. Accordingly, a specific surface area of the lithium-nickel metal oxide particle may be reduced, and the surface of the primary particle and/or the secondary particle may be protected by the lithium-coated element compound, thereby improving the life-span properties and driving stability of the secondary battery.

The lithium-coating element compound having the monoclinic crystal structure may diffuse lithium through a paddle-wheel mechanism. Accordingly, the ionic conductivity of the cathode active material may be improved, and a resistance may be reduced, thereby improving the power properties.

For example, the paddle-wheel mechanism may refer to a phenomenon that an activation energy required for a lithium ion movement decreases when lithium ions are moved while elements including oxygen rotate around a coating element ion forming an anion.

For example, the crystal structure of the lithium-coated element compound may be detected by a transmission electron microscope-selected area electron diffraction (TEM-SAED) analysis.

In some embodiments, the coating element may include sulfur. In this case, the lithium-coating element compound may be derived from a sulfonyl-based compound represented by Structural Formula 1 below.

[Structural formula 1]

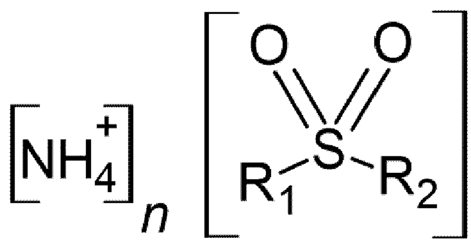

In Structural Formula 1, n is $0 \le n < 3$, $R_1$ and R2 may each independently be $O^-$, $NH_2$, $NH_3^+$, OH, or a C1 to C3 hydrocarbon group capable of being substituted with a substituent, and the substituent may include halogen, a cyano group, a hydroxyl group, a phosphoric acid group, a carboxyl group or a salt thereof.

In some embodiments, the hydrocarbon group included in $R_1$ and $R_2$ in Structural Formula 1 may be substituted or connected by at least one selected from the group consisting of a carbon-carbon double bond, -O-, -S-, -CO-, -OCO-, -SO-, -CO-O-, -OCO-O-, -S-CO-, -S-CO-O-, -CO-NH-, -NH-CO-O-, -NR'-,

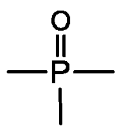

,

-S-S- and $-SO_2-$, and R' may be a hydrogen atom or an alkyl group having 1 to 3 carbon atoms.

In some embodiments, the sulfonyl-based compound may include at least one of compounds represented by Chemical Formulae 3 to 5.

[Chemical Formula 3]

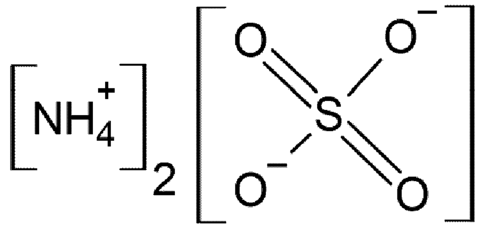

[Chemical Formula 4]

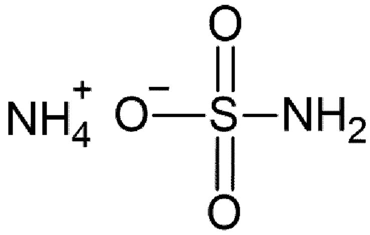

[Chemical Formula 5]

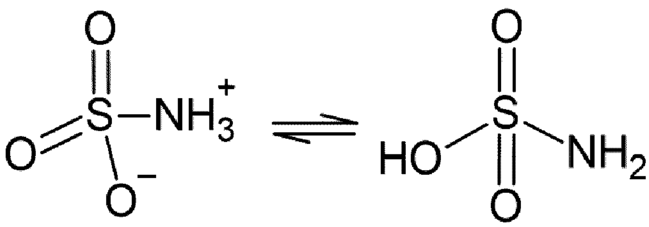

For example, the sulfonyl-based compound may react with lithium remaining on the surface of the lithium-nickel metal oxide particle to form the lithium-coated element compound. Accordingly, the capacity and life-span properties of the secondary battery may be improved.

In some embodiments, a content of the coating element included in the lithium-nickel metal oxide particles may be in a range from 2000 ppm to 7000 ppm based on the total weight of the lithium-nickel metal oxide particles, and may be in a range from 2500 ppm to 4000 ppm in some embodiments. In the above range, sufficient coating elements may react with the residual lithium to improve the life-span properties of the battery, and deterioration of the capacity properties due to an excessive coating element concentration may be prevented.

For example, a content of $Li_2CO_3$ remaining on the surface of the lithium-nickel metal oxide particles may be 2500 ppm or less based on the total weight of the lithium-nickel metal oxide particles, and a content of LiOH remaining on the surface of the lithium-nickel metal oxide particles may be 2000 ppm or less based on the total weight of the lithium-nickel metal oxide particles. Within the above range, the power and life-span properties of the cathode active material may be further improved.

Hereinafter, a method for manufacturing the above-described cathode active material for a lithium secondary battery according to example embodiments are provided.

FIG. 1 is a process flow-diagram describing a method of preparing a cathode active material in accordance with example embodiments.

Referring to FIG. 1, preliminary lithium-nickel metal oxide particles may be prepared (e.g., in a phase of S10).

For example, a transition metal precursor containing nickel and a lithium precursor may react to prepare the preliminary lithium-nickel metal oxide particles. The transition metal precursor (e.g., a Ni-Co-Mn precursor) may be prepared through a coprecipitation reaction.

For example, the transition metal precursor may be prepared through the coprecipitation reaction of metal sources. The metal sources may include a nickel source, a manganese source and/or a cobalt source.

The nickel source may include nickel sulfate, nickel hydroxide, nickel nitrate, nickel acetate and a hydrate thereof. The manganese source may include manganese sulfate, manganese acetate and a hydrate thereof. The cobalt source may include cobalt sulfate, cobalt nitrate, cobalt carbonate and a hydrate thereof. These may be used alone or in a combination of two or more therefrom.

The metal sources may be mixed with a precipitating agent and/or a chelating agent in a ratio satisfying the content or concentration ratio of each metal described with reference to Chemical Formula 1 to prepare an aqueous solution. The transition metal precursor may be prepared by coprecipitating the aqueous solution in a reactor.

The precipitating agent may include an alkaline compound such as sodium hydroxide (NaOH), sodium carbonate ($Na_2CO_3$), etc. The chelating agent may include ammonia water (e.g., $NH_3H_2O$), ammonium carbonate (e.g., $NH_3HCO_3$), etc.

For example, the coprecipitation reaction may be performed at a temperature ranging from about 40°C to about 60°C for about 24 hours to 72 hours.

The lithium precursor may include, e.g., lithium carbonate, lithium nitrate, lithium acetate, lithium oxide, lithium hydroxide, etc. These may be used alone or in a combination of two or more therefrom.

The preliminary lithium-nickel metal oxide particles and an aqueous coating element solution may be mixed (e.g., in a phase of S20).

For example, the aqueous coating element solution may include a coating source compound containing the coating element as described above. The coating source compound may include an oxide or a hydroxide of at least one element selected from the group consisting of W, Al, Zr, Ti, Ta, Mo, Nb, P and B, and/or the sulfonyl-based compound as described above.

These may be used alone or in a combination of two or more depending on the type of the coating element. In an embodiment, when the coating element contains sulfur, the coating source compound may include the sulfonyl-based compound.

In example embodiments, the aqueous coating element solution may be formed by introducing the coating element into water (e.g., de-ionized water (DIW)).

For example, the aqueous coating element solution may be formed by introducing the coating source compound into water.

In some embodiments, a content of the coating element aqueous solution may be in a range from 20 wt% to 100 wt%, and, in some embodiments, may be in a range from 40 wt% to 60 wt% based on a weight of the preliminary lithium-nickel metal oxide particles.

In some embodiments, the aqueous coating element solution may be formed by adding the coating element (e.g., the coating source compound) to 40 wt% to 60 wt% of water based on the weight of the preliminary lithium-nickel metal oxide particles.

In the content range of the aqueous coating element solution, the coating element and the preliminary lithium-nickel metal oxide particles may be sufficiently combined during the spray drying. Accordingly, the residual lithium on the surface of the lithium-nickel metal oxide particles may be reduced, and the life-span and power properties of the secondary battery may be improved.

In example embodiments, the mixed preliminary lithium-nickel metal oxide particles and the aqueous coating element solution may be spray-dried to coat a preliminary lithium-nickel metal oxide (e.g., in a phase S30).

Through the spray drying, the coating element may be uniformly coated on the preliminary lithium-nickel metal oxide particles. Accordingly, the above-described coating area may be further increased.

Through the spray drying, the preliminary lithium-nickel metal oxide particles and the coating element may be combined. For example, the residual lithium on the surface of the preliminary lithium-nickel metal oxide particles and the coating element may be combined by the spray drying to form a lithium-coating element compound.

Accordingly, an additional washing treatment for removing the residual lithium may be omitted. Thus, damages to the layered structure of the lithium-nickel metal oxide particles which may occur when the cathode active material is directly washed with water may be suppressed. Further, the power and life-span properties of the secondary battery may be improved. For example, the washing treatment may refer to removing the residual lithium by washing the cathode active material with substantially the same amount of water as that of the cathode active material.

The spray drying may be performed using the mixed solution containing the aqueous coating element solution, and may not be a dry coating. Accordingly, the coating element may be prevented from failing to penetrate between the primary particles due to lack of capillary force during the dry coating. The dry coating may refer to mixing a coating source compound powder directly into the preliminary lithium-metal oxide particles.

The spray drying may be performed using a spray dryer.

In some embodiments, the spray drying may include introducing a mixed solution of the preliminary lithium-nickel metal oxide particles and the aqueous coating element solution into a spray dryer, spraying and drying.

The spraying may be performed through a nozzle by a pump of the spray dryer. In an embodiment, the mixed solution may be heated to an appropriate temperature before the spraying.

For example, the mixed solution may be sprayed into a cylinder in droplets by the spraying. Accordingly, the coating element may be more uniformly coated on the preliminary lithium-nickel metal oxide particles.

In some embodiments, a spraying rate may be in a range from 400 mL/h to 800 mL/h, and may be in a range from 500 mL/h to 700 mL/h in some embodiments. In the above range, the reaction with the coating element may be sufficiently performed while spraying the mixed solution in the droplet state.

In some embodiments, the drying may be performed at an inside of the cylinder in which the mixed solution is sprayed.

In some embodiments, the drying may be performed at a temperature from 100°C to 200°C, or from 130°C to 170°C. In the above temperature range, damages to the layered structure or the crystal structure of the lithium-nickel metal oxide particle may be suppressed while sufficiently combining the preliminary lithium-nickel metal oxide particles and the coating element.

In some embodiments, the coated preliminary lithium-nickel metal oxide particles may be obtained from the spray dryer.

For example, the coated preliminary lithium-nickel metal oxide particles may be transferred from the cylinder to a centrifugal separator. The coated preliminary lithium-nickel metal oxide particles may be obtained by being separated from a lower end of the centrifugal separator.

In example embodiments, the coated preliminary lithium-nickel metal oxide particles may be fired to form lithium-nickel metal oxide particles having the above-described coating area of 25% or more (e.g., in a phase of S40).

In some embodiments, the firing may be performed at a temperature in a range from 250°C to 450°C. In the above temperature range, the preliminary lithium-nickel metal oxide particles and the coating element may be sufficiently and stably combined.

For example, the firing can be performed under an oxygen atmosphere.

FIGS. 2 and 3 are a schematic plan view and a cross-sectional view, respectively, illustrating a lithium secondary battery in accordance with example embodiments. For example, FIG. 3 is a cross-sectional view taken along line I-I' of FIG. 2 in a thickness direction.

The structure illustrated in FIGS. 2 and 3 is only an example for convenience of descriptions, and the lithium secondary battery provided by the present disclosure is not limited to the structure of FIGS. 2 and 3.

The lithium secondary battery includes a cathode 100 including the above-described cathode active material and an anode 130 facing the cathode 100.

The cathode 100 may include a cathode current collector 105 and a cathode active material layer 110 formed on at least one surface of the cathode current collector 105.

The cathode current collector 105 may include stainless steel, nickel, aluminum, titanium or an alloy thereof. The cathode current collector 105 may include aluminum or stainless steel surface treated with carbon, nickel, titanium, silver, etc. For example, a thickness of the cathode current collector 105 may be in a range from 10 $\mu$m to 50 $\mu$m.

The cathode active material layer 110 may include the above-described cathode active material.

The cathode active material may be mixed in a solvent to prepare a cathode slurry. The cathode slurry may be coated on at least one surface of the cathode current collector 105, and then dried and pressed to prepare the cathode active material layer 110. The coating may include a gravure coating, a slot die coating, a multi-layer simultaneous die coating, an imprinting, a doctor blade coating, a dip coating, a bar coating, a casting, etc. The cathode active material layer 110 may further include a binder, and may optionally further include a conductive material, a thickener, etc.

N-methyl-2-pyrrolidone (NMP), dimethylformamide, dimethylacetamide, N, N-dimethylaminopropylamine, ethylene oxide, tetrahydrofuran, etc., may be used as the solvent.

The binder may include polyvinylidenefluoride (PVDF), poly(vinylidene fluoride-co-hexafluoropropylene), polyacrylonitrile, polymethyl methacrylate, acrylonitrile butadiene rubber (NBR), polybutadiene rubber (BR), styrene-butadiene rubber (SBR), etc. These may be used alone or in a combination of two or more therefrom.

In an embodiment, a PVDF-based binder may be used as the cathode binder. In this case, an amount of the binder for forming the cathode active material layer 110 may be reduced, and an amount of the cathode active material may be relatively increased. Accordingly, the power and capacity properties of the secondary battery may be improved.

The conductive material may be added to promote a conductivity of the cathode active material layer 110 and/or a mobility of lithium ions or electrons. For example, the conductive material may include a carbon-based conductive material such as graphite, carbon black, acetylene black, Ketjen black, graphene, carbon nanotube, a VGCF (vapor-grown carbon fiber), a carbon fiber, etc., and/or a metal-based conductive material including tin, tin oxide, a perovskite material such as titanium oxide, $LaSrCoO_3$, $LaSrMnO_3$, etc. These may be used alone or in a combination of two or more therefrom.

The cathode slurry may further include a thickener and/or a dispersant. In an embodiment, the cathode slurry may include the thickener such as carboxymethyl cellulose (CMC).

The anode 130 may include an anode current collector 125 and an anode active material layer 120 formed on at least one surface of the anode current collector 125.

For example, the anode current collector 125 may include a copper foil, a nickel foil, a stainless steel foil, a

titanium foil, a nickel foam, a copper foam, a polymer substrate coated with a conductive metal, etc. These may be used alone or in a combination of two or more therefrom. For example, a thickness of the anode current collector 125 may be in a range from 10 μm to 50 μm.

The anode active material layer 120 may include an anode active material. A material capable of adsorbing and desorbing lithium ions may be used as the anode active material. For example, the anode active material may include a carbon-based material such as a crystalline carbon, an amorphous carbon, a carbon composite, a carbon fiber, etc.; a lithium metal; a lithium alloy; a silicon (Si)-containing material or a tin (Sn)-containing material, etc. These may be used alone or in a combination of two or more therefrom.

The amorphous carbon may include hard carbon, soft carbon, coke, a mesocarbon microbead (MCMB), a mesophase pitch-based carbon fiber (MPCF), etc.

The crystalline carbon may include a graphite-based carbon such as natural graphite, artificial graphite, a graphitized coke, a graphitized MCMB, a graphitized MPCF, etc.

The lithium metal may include a pure lithium metal and/or a lithium metal having a protective layer thereon for suppressing a dendrite growth. In an embodiment, a lithium metal-containing layer deposited or coated on the anode current collector 125 may be used as the anode active material layer 120. In an embodiment, a lithium thin film may be used as the anode active material layer 120.

Examples of an element included in the lithium alloy may include aluminum, zinc, bismuth, cadmium, antimony, silicon, lead, tin, gallium, indium, etc. These may be used alone or in a combination of two or more therefrom.

The silicon-containing material may provide more increased capacity properties. The silicon-containing material may include Si, SiOx ($0<x<2$), a metal-doped SiOx ($0<x<2$), a silicon-carbon composite, etc.

The metal may include lithium and/or magnesium, and the metal-doped SiOx ($0<x<2$) may include a metal silicate.

The anode active material above may be mixed in a solvent to prepare an anode slurry. The anode slurry may be coated/deposited on the anode current collector 125, and then dried and pressed to prepare the anode active material layer 120. The coating may include a gravure coating, a slot die coating, a multi-layer simultaneous die coating, an imprinting, a doctor blade coating, a dip coating, a bar coating, a casting, etc. The anode active material layer 120 may further include a binder, and may optionally further include a conductive material, a thickener, etc.

The solvent included in the anode slurry may include water, pure water, deionized water, distilled water, ethanol, isopropanol, methanol, acetone, n-propanol, t-butanol, etc. These may be used alone or in a combination of two or more therefrom.

The above-described materials used to fabricate the cathode 100 may also be used as the binder, the conductive material and the thickener.

In some embodiments, a styrene-butadiene rubber (SBR)-based binder, carboxymethyl cellulose (CMC), a polyacrylic acid-based binder, poly(3,4-ethylenedioxythiophene) (PEDOT)-based binder, etc., may be used as the anode binder. These may be used alone or in a combination of two or more therefrom.

In example embodiments, a separator 140 may be interposed between the cathode 100 and the anode 130. The separator 140 may be formed to prevent an electrical short between the cathode 100 and the anode 130 and to generate flow of ions. For example, a thickness of the separator may be in a range from 10 μm to 20 μm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, an ethylene/methacrylate copolymer, etc. These may be used alone or in a combination of two or more therefrom.

The porous nonwoven fabric may include a glass fiber having a high melting point, a polyethylene terephthalate fiber, etc.

The separator 140 may further include a ceramic-based material. For example, inorganic particles may be coated on a polymer film or dispersed in the polymer film to improve a heat resistance.

The separator 140 may have a single-layered or a multi-layered structure including the above-described polymer film and/or the nonwoven fabric.

In example embodiments, an electrode cell may be defined by the cathode 100, the anode 130 and the separator 140, and a plurality of the electrode cells may be stacked to form an electrode assembly 150 in the form of, e.g., a jelly roll. For example, the electrode assembly 150 may be formed by winding, stacking, zigzag folding, stack-folding, etc., of the separator 140.

For example, the electrode assembly 150 may be accommodated together with an electrolyte in a case 160 to define the lithium secondary battery. In example embodiments, a non-aqueous electrolyte may be used as the electrolyte.

The non-aqueous electrolyte solution may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

For example, the organic solvent may include propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethyl ethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted cyclic carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution described above. In this case, the lithium secondary battery may be fabricated in the form of an all-solid-state battery. Additionally, a solid electrolyte layer may be disposed between the cathode 100 and the anode 130 instead of the above-described separator 140.

The solid electrolyte may include a sulfide-based electrolyte. Non-limiting examples of the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is Ge, Zn or Ga), $Li_2S-GeS_2$, $Li_2S-SiS_2-Li_3PO_4$, $Li_2S-SiS_2-Li_pMO_q$, (p and q are positive numbers, M is P, Si, Ge, B, Al, Ga or In), $Li_7$-x$PS_6$-x$Cl_x$ ($0 \le x \le 2$), $Li_7$-x$PS_6$-x$Br_x$ ($0 \le x \le 2$), $Li_7$-x$PS_6$-x$I_x$ ($0 \le x \le 2$), etc. These may be used alone or in a combination thereof.

In an embodiment, the solid electrolyte may include, e.g., an oxide-based amorphous solid electrolyte such as $Li_2O-B_2O_3-P_2O_5$, $Li_2O-SiO_2$, $Li_2O-B_2O_3$, $Li_2O-B_2O_3-ZnO$, etc.

As illustrated in FIGS. 2 and 3, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a square shape, a pouch shape or a coin shape.

Hereinafter, embodiments of the present disclosure are described in more detail with reference to experimental examples.

Example 1

(1) Preparation of preliminary lithium-nickel metal oxide particles (S10)

$NiSO_4$, $CoSO_4$ and $MnSO_4$ were mixed in a molar ratio of 8:1:1, respectively, using distilled water bubbled with $N_2$ for 24 hours to remove internal dissolved oxygen. The solution was added to a reactor at 50°C, and a coprecipitation reaction proceeded for 48 hours using NaOH and $NH_3H_2O$ as a precipitant and a chelating agent, respectively, to obtain $Ni_{0.8}Co_{0.1}Mn_{0.1}(OH)_2$ as a transition metal precursor. The obtained precursor was dried at 80°C for 12 hours and then re-dried at 110°C for 12 hours.

Lithium hydroxide and the transition metal precursor were added to a dry highspeed mixer in a molar ratio of 1.01:1 and mixed uniformly for 5 minutes. The mixture was placed in a firing furnace, heated to a temperature of 730°C to 750°C at a ramping rate of 2°C/min, and maintained at a temperature of 730°C to 750°C for 10 hours. Oxygen was passed continuously at a flow rate of 20 mL/min during increasing and maintaining the temperature. After the firing, natural cooling was performed to room temperature, and then pulverized and classified to produce preliminary lithium-nickel oxide particles each having a shape of a secondary particle and a composition of $LiNi_{0.8}Co_{0.1}Mn_{0.1}O_2$ (average particle diameter (D50): 10 μm).

Preparation of aqueous coating element solution and mixing (S20)

$Al_2O_3$ (D50: less than 100 nm) nanoparticles containing 3000 ppm of Al relative to a weight of the preliminary lithium-nickel metal oxide particles were introduced into pure water (DIW) as a coating source compound, and then stirred to prepare an aqueous coating element solution.

50 wt% of the aqueous coating element solution based on the weight of the preliminary lithium-nickel metal oxide particles was mixed with the preliminary lithium-nickel metal oxide particles for 10 minutes.

Spray drying (S30)

FIG. 4 is an image of a B-290 spray dryer manufactured from Buchi. Spray drying was performed using the spray dryer of FIG. 4.

Specifically, the mixed solution of the preliminary lithium-nickel metal oxide particles and the aqueous coating element solution was put into a spray dryer (Mini Spray Dryer B-290 by Buchi), pressurized with a pump, and sprayed into a cylinder having an internal temperature of 150°C through a nozzle in a state of droplets. The injection rate was set to 600 mL/h.

The mixture in the droplet state was sprayed and dried to prepare coated preliminary lithium-nickel metal oxide particles. The coated preliminary lithium-nickel metal oxide particles were obtained using a centrifugal separator.

Firing (S40)

The coated preliminary lithium-nickel metal oxide particles were put in a firing furnace, supplied with oxygen at a flow rate of 20 L/min, heated to 400°C at a ramping rate of 2°C/min, and fired at the increased temperature for 10 hours. After the firing, lithium-nickel metal oxide particles were obtained by classifying by a 325 mesh.

Fabrication of lithium secondary battery

A lithium secondary battery was manufactured using the lithium-nickel metal oxide particles as a cathode active material.

Specifically, the cathode active material, Denka Black as a conductive material and PVDF as a binder were mixed in a mass ratio of 93:5:2 to prepare a cathode slurry. The cathode slurry was coated, dried and pressed on an aluminum current collector to prepare a cathode.

A lithium metal was used as a cathode active material.

The cathode and the anode prepared as described above were notched in a circular shape having $\Phi$ 14 and $\Phi$ 16 diameters, respectively, and stacked. An electrode cell was formed by interposing a separator (polyethylene, thickness: 13 $\mu$m) notched in a dimension of $\Phi$ 19 between the cathode and the anode. The $\Phi$ N (N is a positive number) refers to a circular shape having a diameter of N mm.

The electrode cell was put into a coin cell exterior material having a diameter of 20 mm and a height of 1.6 mm, injected with an electrolyte, and assembled. Thereafter, an aging was performed for 12 hours or more so that an electrolyte solution impregnated the electrodes.

As the electrolyte solution, a 1M $LiPF_6$ solution formed using a mixed solvent of EC/EMC (30/70; volume ratio) was used.

Formation charge and discharge were performed on the secondary battery manufactured as described above (Charge condition: CC-CV 0.1C 4.3V 0.005C CUT-OFF, Discharge condition: CC 0.1C 3V CUT-OFF).

Examples 2 to 16

Cathode active materials and lithium secondary batteries were manufactured by the same method as that in Example 1, except that the type of the coating source compound, the content of the aqueous coating element solution based on to the weight of the preliminary lithium-nickel metal oxide particles, and the input amount of the coating element based on the weight of the preliminary lithium-nickel metal oxide particles were changed as shown in Table 1 below.

Comparative Example 1

A cathode active material and a lithium secondary battery were manufactured by the same method as that in Example 1, except that $(NH_4)_2SO_4$ was used instead of $Al_2O_3$ as the coating source compound, the preliminary lithium-nickel metal oxide particles and $(NH_4)_2SO_4$ powder were dry-mixed in a weight ratio of 1:0.0124, and the spray drying (S30) was not performed.

Comparative Example 2

When preparing and mixing the aqueous solution coating element (S20), a mixed solution of pure water and $(NH_4)_2SO_4$ powder (1: 1 weight ratio) was used as the aqueous coating element solution.
When preparing and mixing the aqueous coating element solution (S20), the preliminary lithium-nickel metal oxide particles were introduced into an excessive amount of the aqueous coating element solution and mixed for 20 minutes. After the mixing, the preliminary lithium-nickel metal oxide particles were filtered to separate the filtrate and dried at 150°C for 12 hours using a general dryer.
The general dryer refers to a dryer in which the mixed solution is dried by a simple heating without spraying in the droplets state.
The spray drying (S30) was not performed.
A cathode active material and a lithium secondary battery were manufactured by the same method as that in Example 1, except for the above details.

Comparative Example 3

A cathode active material and a lithium secondary battery were manufactured by the same method as that in Example 1, except that $(NH_4)_2SO_4$ was used as the coating source compound instead of $Al_2O_3$, the mixture of the preliminary lithium-nickel metal oxide particles and the aqueous coating element solution was dried at 150°C for 12 hours using the general dryer, and the spray drying (S30) was not performed.

Experimental Example

(1) SEM-EDS Analysis

A Q-map image was obtained using an SEM-EDS for the lithium-nickel metal oxide particles of each of Examples and Comparative Examples. An SEM equipment of FEI's Apreo and an SEM-EDS equipment of Brooker's FlatQuad were used.
The SEM-EDS measurement conditions were as follows.

i) Accelerating voltage: 10 kV
ii) Beam current: 0.8 nA
iii) Detector: ETD (Everhart-Thornley Detector), FlatQuad EDS (FQ-EDS)
iv) Use case: Standard
v) Laboratory temperature: 20±5°C
vi) Laboratory relative humidity: 65% or less

Specifically, a lithium-nickel metal oxide particle sample was closely attached to a carbon tape and sufficiently blown with an air gun.
Thereafter, the sample was mounted on the SEM equipment.
After inserting an FQ-EDS detector, a working distance (WD) was adjusted to 11 mm, and a focus and an alignment were adjusted.
A magnification was set to 1000 times, and AN EDS mapping was performed for 300 seconds to obtain a Q-map image.
Using an ImageJ software, an area ($A_C$) of a region where a content of the coating element was 1.6 wt% or more and an area ($A_{Ni}$) of a region where nickel was present were calculated from the Q-map image.
The SEM-EDS analysis was repeated three times under the same method and condition to calculate three $A_C$ values and three $A_{Ni}$ values. An average value of the three AC values was substituted as $A_C$ in Equation 1, and an average value of the three $A_{Ni}$ values was substituted as $A_{NI}$ in Equation 1 to calculate the coating area (%).
FIG. 5 is an image showing regions where a content of coating elements is 1.6 wt% or more based on a total weight of lithium-nickel metal oxide particles in a Q-map image obtained through the SEM-EDS of the lithium-nickel metal oxide particles of Example 1.
FIG. 6 is an image showing regions where nickel is present in the Q-map image obtained through SEM-EDS of the lithium-nickel metal oxide particles of Example 1.
The obtained images as shown in FIGS. 5 and 6 were analyzed with the ImageJ software to calculate $A_C$ and $A_{Ni}$.
The measured content of the coating element was converted into ppm based on the total weight of the lithium-nickel metal oxide particles to calculate a residual coating element content.

(2) Measurement of initial discharge capacity and evaluation of initial capacity efficiency

The lithium secondary batteries prepared according to the above-described Examples and Comparative Examples were charged (CC-CV 0.1 C 4.3V 0.005C CUT-OFF) in a chamber at 25°C, and then a battery capacity (initial charge capacity) was measured. Thereafter, a battery capacity (initial discharge capacity) was measured after being discharged (CC 0.1C 3.0V CUT-OFF).

An initial capacity efficiency was evaluated by converting the measured initial discharge capacity divided by the measured initial charge capacity as a percentage (%).

(3) Measurement of capacity retention

For the lithium secondary batteries according to Examples and Comparative Examples, charge (CC/CV 0.5C 4.3V 0.05C CUT-OFF) and discharge (CC 1.0C 3.0V CUT-OFF) were repeated 100 times to evaluate a life-span retention as a percentage of a value obtained by dividing a discharge capacity at the 100th cycle by a discharge capacity at the 1st cycle.

In Examples and Comparative Examples, the coating method, the coating source compound, the content of the aqueous coating element solution based on the weight of the preliminary lithium-nickel metal oxide particles, the input content of the coating element based on the weight of the preliminary lithium-nickel metal oxide particles, the content of the residual coating element based on the total weight of the lithium-nickel metal oxide particles and the coating area are shown in Table 1 below.

[Table 1]

| | coating method | coating source compound | content of aqueous coating element solution (wt%) | input content of coating element (ppm) | content of residual coating element (ppm) | coating area(%) |
|---|---|---|---|---|---|---|
| Example 1 | spray drying | $Al_2O_3$ | 50 | 3000 | 2961 | 53.5 |
| Example 2 | spray drying | $(NH_4)_2WO_4$ | 50 | 3000 | 2925 | 52.7 |
| Example 3 | spray drying | $Zr(OH)_4$ | 50 | 3000 | 2890 | 52.8 |
| Example 4 | spray drying | $Ti(OH)_4$ | 50 | 3000 | 2932 | 51.9 |
| Example 5 | spray drying | $H_3BO_3$ | 50 | 3000 | 2899 | 52.1 |
| Example 6 | spray drying | $(NH_4)_2SO_4$ | 100 | 3000 | 2680 | 25.8 |
| Example 7 | spray drying | $(NH_4)_2SO_4$ | 50 | 3000 | 2956 | 52.8 |
| Example 8 | spray drying | $(NH_4)_2SO_4$ | 20 | 3000 | 2842 | 37.1 |
| Example 9 | spray drying | $(NH_4)_2SO_4$ | 40 | 3000 | 2856 | 48.4 |
| Example 10 | spray drying | $(NH_4)_2SO_4$ | 60 | 3000 | 2964 | 46.5 |
| Example 11 | spray drying | $(NH_4)_2SO_4$ | 18 | 3000 | 2815 | 34.6 |
| Example 12 | spray drying | $(NH_4)_2SO_4$ | 105 | 3000 | 2667 | 25.0 |
| Example 13 | spray drying | $(NH_4)_2SO_4$ | 50 | 2100 | 1915 | 36.2 |
| Example 14 | spray drying | $(NH_4)_2SO_4$ | 50 | 2600 | 2473 | 45.7 |
| Example 15 | spray drying | $(NH_4)_2SO_4$ | 50 | 4200 | 4056 | 48.1 |
| Example 16 | spray drying | $(NH_4)_2SO_4$ | 50 | 7200 | 7091 | 51.6 |
| Comparative Example 1 | dry mixing | $(NH_4)_2SO_4$ | - | 3000 | 2816 | 15.2 |
| Comparative Example 2 | wet mixing/filtrate separation | $(NH_4)_2SO_4$ | 50 | 3000 | 327 | 2.6 |
| Comparative Example 3 | general drying | $(NH_4)_2SO_4$ | 50 | 3000 | 2769 | 23.3 |

The measurement and evaluation results according to the above-described Experimental Example are shown in Table 2 below.

[Table 2]

| | initial discharge capacity (mAh/g) | initial capacity efficiency (%) | capacity retention (%) |
|---|---|---|---|
| Example 1 | 214.1 | 92.0 | 93 |
| Example 2 | 214.0 | 91.9 | 92 |
| Example 3 | 213.8 | 91.8 | 91 |
| Example 4 | 213.9 | 92.1 | 91 |
| Example 5 | 213.7 | 91.8 | 92 |
| Example 6 | 206.1 | 87.7 | 86 |
| Example 7 | 213.7 | 91.7 | 93 |
| Example 8 | 211.6 | 90.8 | 91 |
| Example 9 | 212.0 | 91.4 | 90 |
| Example 10 | 212.8 | 91.9 | 91 |
| Example 11 | 211.7 | 91.5 | 88 |
| Example 12 | 210.0 | 90.7 | 85 |
| Example 13 | 210.7 | 90.8 | 87 |
| Example 14 | 213.2 | 91.0 | 90 |
| Example 15 | 212.8 | 91.7 | 90 |
| Example 16 | 211.9 | 90.8 | 88 |
| Comparative Example 1 | 202.6 | 86.2 | 62 |
| Comparative Example 2 | 208.5 | 88.7 | 78 |
| Comparative Example 3 | 210.1 | 89.4 | 76 |

Referring to Table 1 and Table 2, in Examples where the coating area was 25% or more, the initial discharge capacity, the initial efficiency and/or the capacity retention were generally improved compared to those from Comparative Examples.

In Examples 11 and 12 where the content of the aqueous coating element solution was not within 20 wt% to 100 wt% based on the weight of the preliminary lithium-nickel metal oxide particles, the initial discharge capacity, the initial efficiency and the capacity retention were relatively lowered.

In Examples 13 and 16, in which the content of the residual coating element exceeds 2000 ppm to 7000 ppm with respect to the total weight of the lithium-nickel metal oxide particles, the initial discharge capacity, initial efficiency, and capacity retention were relatively reduced.

**Claims**

1. A cathode active material for a lithium secondary battery comprising lithium-nickel metal oxide particles that include a coating element, wherein a coating area defined by Equation 1 is 25% or more:

[Equation 1]

$$\text{coating area (\%)} = (A_C/A_{Ni})*100$$

wherein, in Equation 1, $A_C$ is an area of a region where a content of the coating element is 1.6 wt% or more based on a total weight of the lithium-nickel metal oxide particles in a quantitative map (Q-map) image obtained through a scanning electron microscope-energy dispersive X-ray spectroscopy (SEM-EDS), and $A_{Ni}$ is an area of a region where nickel is present in the Q-map image obtained through the SEM-EDS.

2. The cathode active material for a lithium secondary battery according to claim 1, wherein the coating element includes at least one selected from the group consisting of S, W, Al, Zr, Ti, Ta, Mo, Nb, P and B.

3. The cathode active material for a lithium secondary battery according to claim 1 or claim 2, wherein $A_C$ in Equation 1 is an average of values obtained by measuring the area of the region where the content of the coating element is 1.6 wt% or more based on the total weight of the lithium-nickel metal oxide particles in the Q-map image obtained through SEM-EDS three times, and
$A_{Ni}$ in Equation 1 is an average of values obtained by measuring the area of the region where nickel is present in the Q-map image obtained through SEM-EDS three times.

4. The cathode active material for a lithium secondary battery according to any one of claims 1 to 3, wherein the lithium-nickel metal oxide particles include a secondary particle formed by agglomeration of a plurality of primary particles, and the coating element is located between the primary particles or on a surface of the secondary particle.

5. The cathode active material for a lithium secondary battery according to any one of claims 1 to 4, wherein the lithium-nickel metal oxide particles further include a lithium-coating element compound containing the coating element and lithium.

6. The cathode active material for a lithium secondary battery according to any one of claims 1 to 5, wherein the coating area is 35% or more.

7. The cathode active material for a lithium secondary battery according to any one of claims 1 to 6, wherein the lithium-nickel metal oxide particles further include at least one of manganese and cobalt.

8. The cathode active material for a lithium secondary battery according to any one of claims 1 to 7, wherein a content of the coating element is in a range from 2000 ppm to 7000 ppm based on the total weight of the lithium-nickel metal oxide particles.

9. The cathode active material for a lithium secondary battery according to any one of claims 1 to 8, wherein a content of the coating element is in a range from 2500 ppm to 4000 ppm based on the total weight of the lithium-nickel metal oxide particles.

10. A lithium secondary battery, comprising:

a cathode comprising the cathode active material for a lithium secondary battery of any one of claims 1 to 9; and
an anode facing the cathode.

11. A method of preparing a cathode active material for a lithium secondary battery, comprising:

preparing preliminary lithium-nickel metal oxide particles;
mixing the preliminary lithium-nickel metal oxide particles and an aqueous coating element solution;
coating the preliminary lithium-nickel metal oxide particles by a spray drying a mixture of the preliminary lithium-nickel metal oxide particles and the aqueous coating element solution; and
firing the coated preliminary lithium-nickel metal oxide particles to form lithium-nickel metal oxide particles having a coating area defined by Equation 1 of 25% or more:

[Equation 1]

$$\text{coating area (\%)} = (A_C/A_{Ni})*100$$

wherein, in Equation 1, $A_C$ is an area of a region where a content of the coating element is 1.6 wt% or more based on a total weight of the lithium-nickel metal oxide particles in a quantitative map (Q-map) image obtained through a scanning electron microscope-energy dispersive X-ray spectroscopy (SEM-EDS), and $A_{Ni}$ is an area of a region where nickel is present in the Q-map image obtained through the SEM-EDS.

12. The method of claim 11, wherein a content of the aqueous coating element solution is in a range from 20 wt% to 100 wt% based on a weight of the preliminary lithium-nickel metal oxide particles, or
a content of the aqueous coating element solution is in a range from 40 wt% to 60 wt% based on a weight of the

preliminary lithium-nickel metal oxide particles.

**13.** The method of claim 11 or claim 12, wherein the spray drying includes introducing the mixture of the preliminary lithium-nickel metal oxide particles and the aqueous coating element solution into a spray dryer, and spraying and drying the mixture.

**14.** The method of claim 13, wherein a rate of the spraying is in a range from 400 mL/h to 800 mL/h, and the drying is performed at a temperature in a range from 100°C to 200°C.

**15.** The method of any one of claims 11 to 14, wherein the firing is performed at a temperature in a range from 250°C to 450°C.

FIG. 1

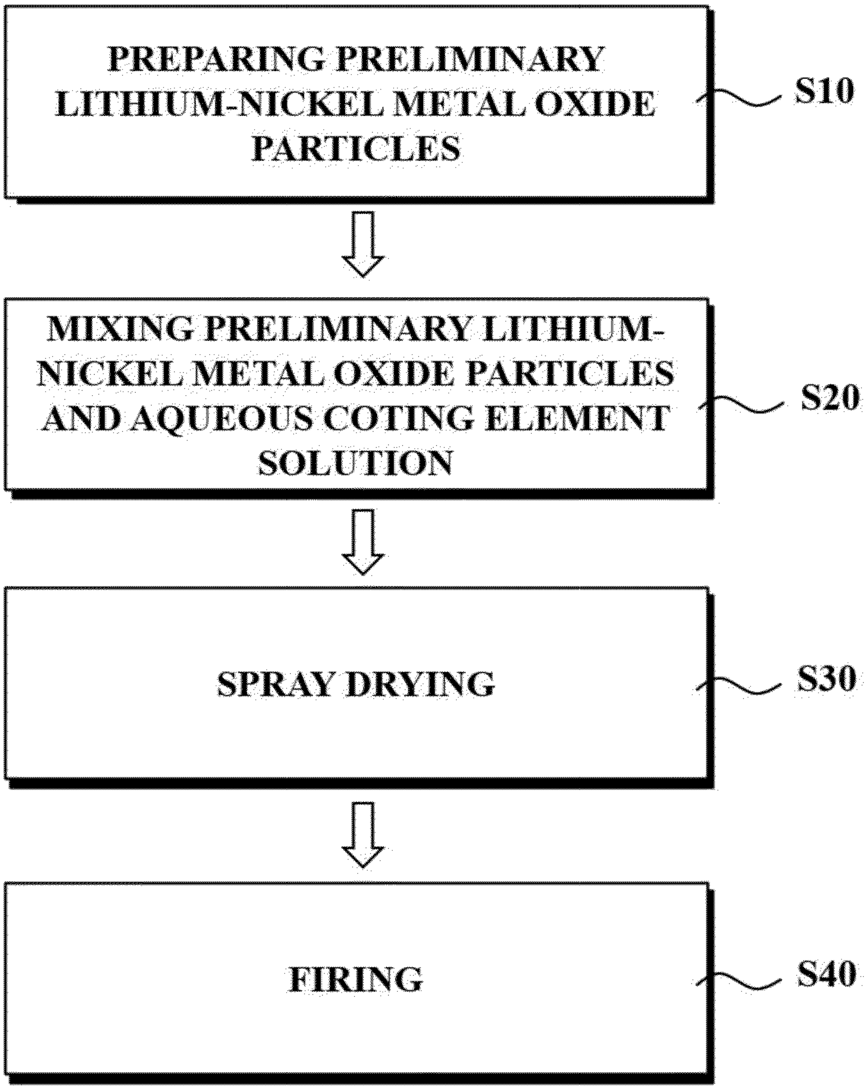
PREPARING PRELIMINARY LITHIUM-NICKEL METAL OXIDE PARTICLES
S10
MIXING PRELIMINARY LITHIUM-NICKEL METAL OXIDE PARTICLES AND AQUEOUS COTING ELEMENT SOLUTION
S20
SPRAY DRYING
S30
FIRING
S40

FIG. 2

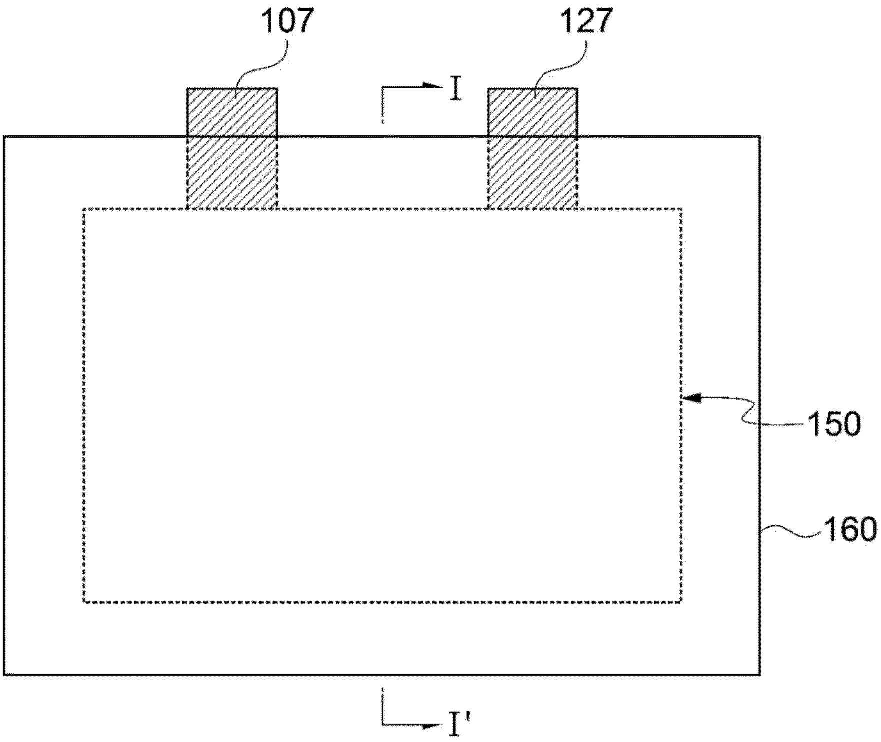


FIG. 3

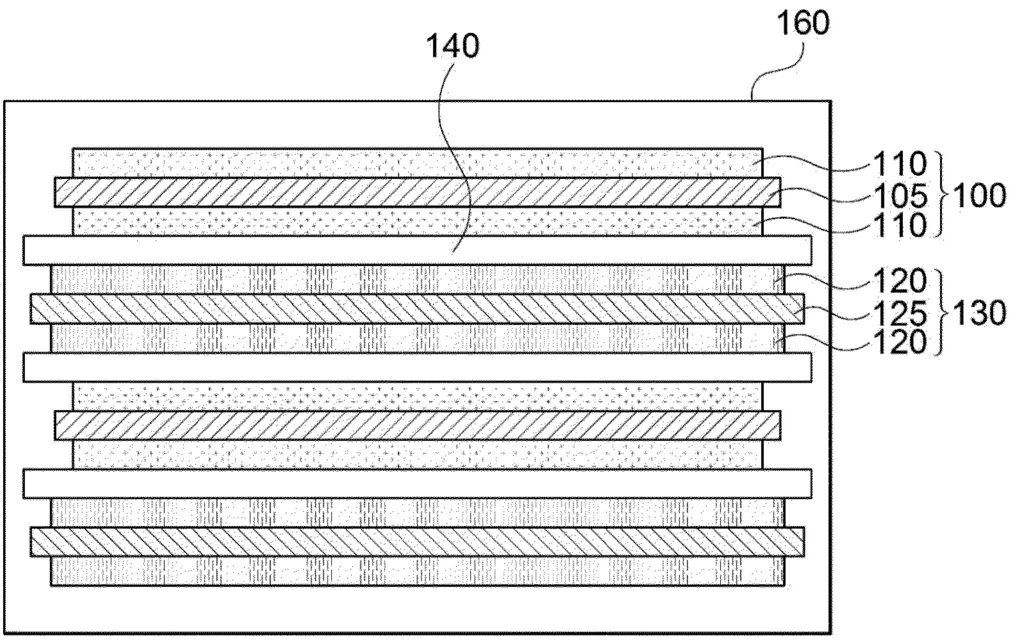

FIG. 4

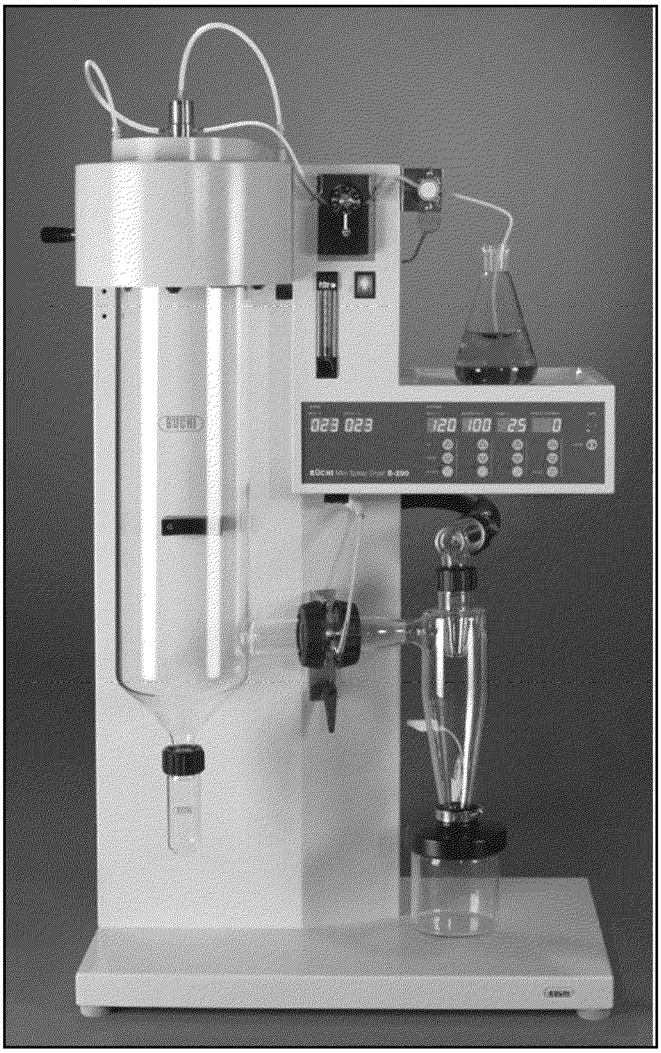

FIG. 5

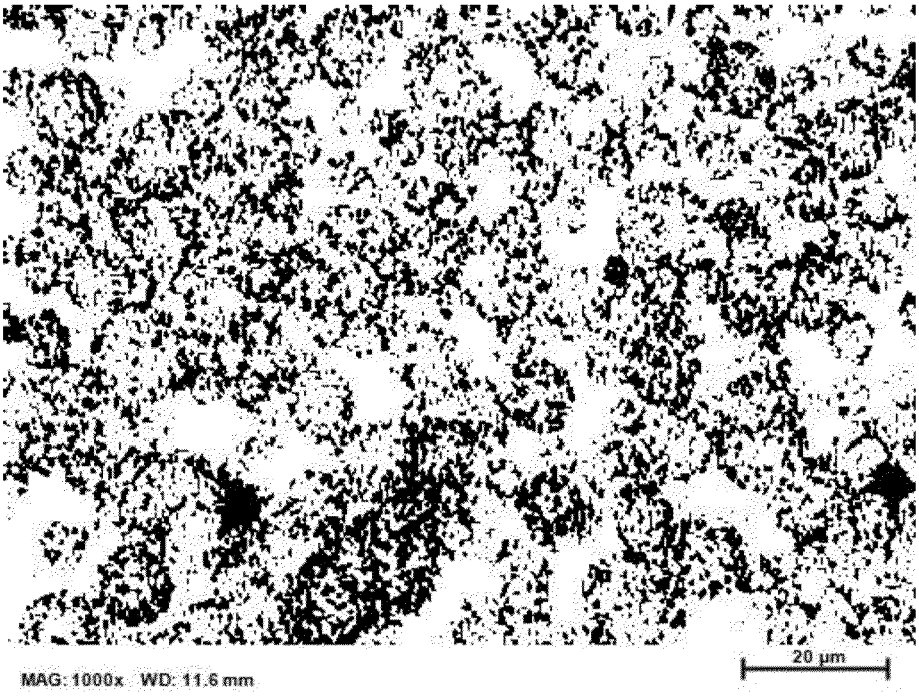


FIG. 6

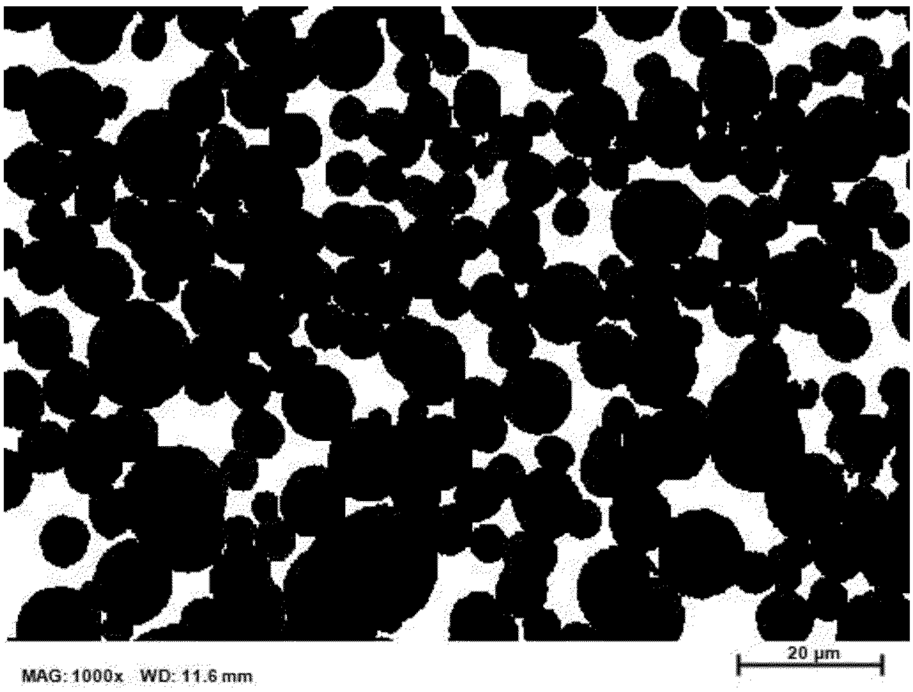

Europäisches Patentamt
European Patent Office
Office européen des brevets

# EUROPEAN SEARCH REPORT

Application Number
EP 24 19 3454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2020 0053624 A (SUMITOMO CHEMICAL CO [JP]; TANAKA CHEMICAL CORP [JP]) 18 May 2020 (2020-05-18) | 1-10 | INV. C01G53/00 H01M4/36 H01M4/525 H01M4/02 H01M10/052 H01M4/62 |
| A | * claims; examples * | 11-15 | |
| X | KR 2020 0140122 A (LG CHEMICAL LTD [KR]) 15 December 2020 (2020-12-15) * paragraph [0017]; examples * | 1-15 | |
| X | US 2014/058598 A1 (MATSUI TAKAAKI [JP] ET AL) 27 February 2014 (2014-02-27) | 1-10 | |
| A | * paragraph [0082]; claims; examples * | 11-15 | |
| X | US 10 283 770 B2 (SAMSUNG SDI CO LTD [KR] ET AL.) 7 May 2019 (2019-05-07) | 1-10 | |
| A | * column 13, lines 47-56; claims; examples * | 11-15 | |

TECHNICAL FIELDS SEARCHED (IPC)

C01G
H01M

The present search report has been drawn up for all claims

1

| Place of search | Date of completion of the search | Examiner |
|---|---|---|
| Munich | 11 December 2024 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 19 3454

This annex lists the patent family members relating to the patent documents cited in the above-mentioned European search report. The members are as contained in the European Patent Office EDP file on
The European Patent Office is in no way liable for these particulars which are merely given for the purpose of information.

11-12-2024

| Patent document cited in search report | Publication date | Patent family member(s) | Publication date |
|---|---|---|---|
| KR 20200053624 A | 18-05-2020 | CN 111295788 A | 16-06-2020 |
| | | EP 3678236 A1 | 08-07-2020 |
| | | JP 6608013 B1 | 20-11-2019 |
| | | JP 2020021639 A | 06-02-2020 |
| | | KR 20200053624 A | 18-05-2020 |
| | | KR 20210027248 A | 10-03-2021 |
| | | US 2020266440 A1 | 20-08-2020 |
| | | WO 2020027187 A1 | 06-02-2020 |
| KR 20200140122 A | 15-12-2020 | NONE | |
| US 2014058598 A1 | 27-02-2014 | CN 103840144 A | 04-06-2014 |
| | | CN 107895790 A | 10-04-2018 |
| | | JP 2014060143 A | 03-04-2014 |
| | | US 2014058598 A1 | 27-02-2014 |
| US 10283770 B2 | 07-05-2019 | KR 20160074236 A | 28-06-2016 |
| | | US 2016181611 A1 | 23-06-2016 |

EPO FORM P0459

For more details about this annex : see Official Journal of the European Patent Office, No. 12/82